(19) Europäisches Patentamt
European Patent Office
Office européen des brevets

(11) **EP 3 734 380 B1**

(12) **EUROPÄISCHE PATENTSCHRIFT**

(45) Veröffentlichungstag und Bekanntmachung des Hinweises auf die Patenterteilung:
**12.10.2022 Patentblatt 2022/41**

(21) Anmeldenummer: **19171868.3**

(22) Anmeldetag: **30.04.2019**

(51) Internationale Patentklassifikation (IPC):
**G05B 19/4062** (2006.01) **B25J 9/16** (2006.01)

(52) Gemeinsame Patentklassifikation (CPC):
**G05B 19/4062; B25J 9/1674;** G05B 2219/43058; G05B 2219/43062

(54) **VERFAHREN UND VORRICHTUNG ZUM ÜBERWACHEN EINER BESCHLEUNIGUNG EINER ACHSE EINER MEHRACHSKINEMATIK**

METHOD AND DEVICE FOR MONITORING AN ACCELERATION OF AN AXIS OF A MULTI-AXIS KINEMATIC

PROCÉDÉ ET DISPOSITIF DE SURVEILLANCE D'UNE ACCÉLÉRATION D'UN AXE D'UNE CINÉMATIQUE MULTIAXIALE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**04.11.2020 Patentblatt 2020/45**

(73) Patentinhaber: **Siemens Aktiengesellschaft 80333 München (DE)**

(72) Erfinder:
- **Frank, Matthias**
  **91052 Erlangen (DE)**
- **Gao, Ran**
  **91054 Erlangen (DE)**
- **Quaschner, Bernd**
  **91091 Grossenseebach (DE)**
- **Walter, Maximilian**
  **90408 Nürnberg (DE)**

(56) Entgegenhaltungen:
EP-A1- 2 113 344    EP-A2- 2 839 934

**Beschreibung**

Die vorliegende Erfindung betrifft ein Verfahren sowie ein Computerprogrammprodukt zum Überwachen einer Beschleunigung einer Achse einer Mehrachskinematik. Des Weiteren betrifft die vorliegende Erfindung eine Vorrichtung zum Überwachen einer Beschleunigung einer Achse einer Mehrachskinematik.

Unter Verwendung einer Funktion zum sicheren Begrenzen der Beschleunigung ("Safely-Limited-Acceleration" (SLA), SLA-Funktion), kann eine aktuelle Beschleunigung einer Achse einer Mehrachskinematik herkömmlicherweise überwacht werden. Hierbei wird eine jeweilige Position der Achse in isochronen Abständen abgetastet, wodurch Positionswerte ermittelt werden. Aus den Positionswerten lässt sich die aktuelle Beschleunigung der Achse durch Differenzbildung abschätzen. Überschreitet die überwachte, aktuelle Beschleunigung der Achse einen zuvor parametrierten Beschleunigungsgrenzwert, wird die Achse durch einen geeigneten sicherheitsbezogenen Mechanismus stillgesetzt.

Die Verwendung der SLA-Funktion ist insbesondere im Zusammenhang mit einer kartesischen Geschwindigkeitsüberwachung einer Mehrachskinematik, beispielsweise innerhalb eines Industrieroboters, relevant. Dabei werden die Positionswerte mehrerer Achsen des Industrieroboters ermittelt. Hieraus werden dann die aktuellen Geschwindigkeiten einzelner Punkte, wie beispielsweise eines Flanschpunkts, eines Tool Center Points (TCP), der Gelenkpositionen oder Eckpunkte von Werkstücken, berechnet. Überschreitet die Geschwindigkeit eines dieser Punkte eine parametrierte Geschwindigkeitsgrenze, werden alle Achsen durch einen sicherheitsbezogenen Mechanismus stillgesetzt.

Bei den ermittelten Positionswerten handelt es sich jedoch um diskrete Werte mit entsprechenden Diskretisierungsfehlern. Deshalb ergibt sich bei der Wahl des Abtastintervalls und bei der Berechnung der Beschleunigung folgende Wechselwirkung zwischen dem gewählten Abtastintervall, dem Diskretisierungsfehler und einer Reaktionszeit der Überwachung:

Je länger das Abtastintervall gewählt wird, desto größer ist die Reaktionszeit der SLA-Funktion. Diese Reaktionszeit sollte allerdings so klein wie möglich sein, damit schnell auf Änderungen der Geschwindigkeit der Achse reagiert werden kann.

Je kürzer das Abtastintervall gewählt wird, desto größer ist aber der Einfluss des Diskretisierungsfehlers in der ermittelten aktuellen Beschleunigung. Dadurch wird während des Betriebes der Achse eine mäßige Beschleunigung über mehrere Takte hin leicht unterschätzt, aber dann in einem Takt stark überschätzt. Dies hat zur Folge, dass fälschlicherweise der sicherheitsbezogene Mechanismus ausgelöst wird, was ein Stillsetzen der Achse zur Folge hat. Um dies zu verhindern, hat der überwachte Beschleunigungswert umso weiter unter dem tatsächlichen gewünschten Beschleunigungsgrenzwert zu liegen, je kürzer das Abtastintervall gewählt wird.

Die Offenlegungsschrift EP 2113344 A1 zeigt ein Verfahren und eine Vorrichtung zur Überwachung einer Sicherheitsfunktion eines Manipulators, insbesondere eines Roboters, und zum Stillsetzen des Manipulators, wenn die überwachte Sicherheitsfunktion nicht erfüllt ist. Es wird offenbart, eine Zustandsgröße des Manipulators und eine Sicherheitsfunktion des Manipulators zu überwachen und den Manipulator in einem ersten Modus stillzusetzen, wenn die überwachte Sicherheitsfunktion nicht erfüllt ist und die überwachte Zustandsgröße in einem ersten Bereich liegt. Ist die überwachte Sicherheitsfunktion nicht erfüllt, während jedoch die überwachte Zustandsgröße in einem zweiten, anderen Bereich liegt, wird der Manipulator in einem von dem ersten Modus verschiedenen zweiten Modus stillgesetzt.

Vor diesem Hintergrund besteht eine Aufgabe der vorliegenden Erfindung darin, die Überwachung einer Beschleunigung einer Achse einer Mehrachskinematik zu verbessern. Dies wird durch den Gegenstand der unabhängigen Ansprüche gelöst.

Erfindungsgemäß wird ein Verfahren nach Anspruch 1 vorgeschlagen.

Durch das bereitgestellte Verfahren wird die Beschleunigung einer Achse unter Verwendung von zumindest zwei Beschleunigungsgrenzwerten, nämlich dem ersten Beschleunigungsgrenzwert und dem zweiten Beschleunigungsgrenzwert, die unterschiedliche Abtastintervalle oder Zeitintervalle aufweisen, gleichzeitig überwacht.

Dies hat den Vorteil, dass durch die gleichzeitige Überwachung mittels der zumindest zwei Beschleunigungsgrenzwerte eine axiale Beschleunigungsüberwachung realisiert wird, die einerseits genau ist, um unerwünschte Abschaltungen zu vermeiden, während andererseits die Beschleunigungsüberwachung des vorliegenden Verfahrens über eine ausreichende Reaktionszeit verfügt, um jede unzulässige Beschleunigung der Achse rechtzeitig zu erkennen, bevor sich die Geschwindigkeit der zu überwachenden Punkte um einen unzulässigen Wert erhöht hat.

Unter einer ausreichenden Reaktionszeit wird vorliegend insbesondere verstanden, dass die Reaktionszeit einerseits derart kurz ausgelegt wird, dass sich die Geschwindigkeit der zu überwachenden Punkte innerhalb der Reaktionszeit nicht so stark erhöht, dass der gewünschte Grenzwert überschritten wird, wenn es zu einer plötzlichen gravierenden Überschreitung eines Beschleunigungsgrenzwertes aufgrund einer unkontrollierten maximalen Beschleunigung der Achse kommt.

Zusätzlich wird die Reaktionszeit andererseits derart lang ausgelegt, dass geringe Überschreitungen des oder der Beschleunigungsgrenzwerte, welche beispielsweise durch einen Programmierfehler bei der Bewegungsführung herbeigerufen werden können, mit höherer Genauigkeit geprüft werden, um somit ein unerwünschtes Abschalten und/oder Stillsetzen der Achsen zu vermeiden.

Die Reaktionszeit ist insbesondere eine Verarbeitungszeit oder eine Verzögerungszeit, welche dadurch hervorgerufen wird, dass eine sicherheitsbezogene Steuerung die erhaltenen Positionswerte der Achsen zuerst verarbeitet, und dann eine Zeit benötigt, um im Fehlerfall zu reagieren und dann ein Steuersignal wieder zurück zu den Achsen zu übertragen, damit vor Ort, also am Standort der Achse oder der Maschine, ein Stillsetzen der Achsen erfolgen kann. Deshalb liegt vorzugsweise der an der sicherheitsbezogenen Steuerung aus den Positionswerten berechnete Geschwindigkeitsgrenzwert unterhalb des tatsächlichen zulässigen Geschwindigkeitsgrenzwertes. Dadurch wird sichergestellt, dass der Geschwindigkeitsgrenzwert auch dann nicht überschritten wird, wenn die Achse oder die Mehrachskinematik während der Reaktionszeit noch weiter beschleunigt wird oder sich beschleunigt. Insbesondere wird die Reaktionszeit durch eine Messung bestimmt.

Die Achse ist vorzugsweise als eine Drehachse, eine Linearachse, eine Rotationsachse, eine Längsachse, eine Querachse, eine Hochachse oder eine Vertikalachse ausgebildet. Die Achse ist insbesondere drehbar gelagert und kann mittels einer Steuerungsvorrichtung, insbesondere der sicherheitsbezogenen Steuerung, angetrieben werden. Die Achse kann sich in eine Richtung oder in eine entgegengesetzte Richtung drehen und/oder bewegen.

Vorzugsweise ist die Achse ein Gelenk einer Maschine, wie beispielsweise ein Roboterarm oder ein Teil eines Roboterarms ausgebildet. Dabei ist der Roboter insbesondere als ein Industrieroboter ausgebildet. Die Maschine ist beispielsweise ein universelle, programmierbare Maschine zur Handhabung, Montage und/oder Bearbeitung von Werkstücken.

Unter einem Abtastintervall, insbesondere dem ersten Abtastintervall, wird vorliegend ein Intervall verstanden, bei welchem eine Mehrzahl N von Positionswerten der Achse mittels Abtastens ermittelt wird. Vorzugsweise wird die Achse mittels des ersten Abtastintervalls in isochronen Abständen abgetastet. Isochrones Abtasten bedeutet insbesondere, dass in festen zeitlichen Abständen die Achse abgetastet wird. Das heißt, dass beispielsweise bei einem ersten Abtastintervall von $T_1$ = 10ms, jede 10ms ein neuer Positionswert der Achse erhalten wird. Beispielsweise wird ein erster Positionswert zum Zeitpunkt $t_1$ = 10ms, ein zweiter Positionswert zum Zeitpunkt $t_2$ = 20ms, ein dritter Positionswert zum Zeitpunkt $t_3$ = 30ms et cetera ermittelt.

Ein Positionswert ist insbesondere ein Wert, welcher eine bestimmte Achsenposition der Achse zu einem bestimmten Zeitpunkt des Abtastens mittels des Abtastintervalls angibt. Wenn sich die Achse bewegt, insbesondere dreht, verändert sich die Achsenposition bei jedem weiteren Zeitpunkt des Abtastens und somit ergeben sich unterschiedliche Positionswerte. Vorzugsweise handelt es sich bei den ermittelten Positionswerten um diskrete Werte.

Unter einem Beschleunigungsgrenzwert, insbesondere dem ersten Beschleunigungsgrenzwert und dem zweiten Beschleunigungsgrenzwert, wird vorliegend ein Grenzwert verstanden, welcher ermittelt, bestimmt, berechnet oder festgelegt wird und zur Überwachung der aktuellen Beschleunigung dient.

Insbesondere wird die aktuelle Beschleunigung mittels der ersten Überwachung und der zweiten Überwachung überwacht, wobei die erste Überwachung und die zweite Überwachung gleichzeitig und/oder parallel ausgeführt werden.

Gemäß einer Ausführungsform umfasst der Schritt d) ein Vergleichen der berechneten aktuellen Beschleunigung jeweils mit dem in der ersten Überwachung verwendeten ersten Beschleunigungsgrenzwert und mit dem in der zweiten Überwachung verwendeten zweiten Beschleunigungsgrenzwert, um zu ermitteln, ob die berechnete aktuelle Beschleunigung den ersten und/oder den zweiten Beschleunigungsgrenzwert überschreitet.

Gemäß einer weiteren Ausführungsform wird in einem Schritt e) eine Aktion durchgeführt, in Abhängigkeit davon, ob die berechnete aktuelle Beschleunigung den ersten und/oder den zweiten Beschleunigungsgrenzwert überschreitet, wobei die Aktion zumindest ein Stillsetzen der Achse umfasst.

Überschreitet die berechnete aktuelle Beschleunigung den ersten und/oder den zweiten Beschleunigungsgrenzwert, wird insbesondere die Aktion durchgeführt. Vorzugsweise umfasst das Stillsetzen der Achse die drei Stopp-Kategorien gemäß der Norm DIN EN 60204-1.

Gemäß einer weiteren Ausführungsform wird die Mehrzahl N von Positionswerten der Achse, mit N ≥ 3, in dem Schritt b) mittels Abtasten mit dem ersten Abtastintervall ermittelt, wobei die Ermittlung der Mehrzahl N von Positionswerten unter Verwendung zumindest eines Positionsgebers durchgeführt wird.

Der Positionsgeber, auch Encoder, bei Drehachsen auch Drehgeber oder Drehwinkelgeber, bei Linearachsen auch Lineargeber, ist ein Sensor der Positionswerte oder deren Änderung als digitale Signale ausgibt, welche anschließend mittels einer Auswerte-Einheit decodiert und weiterverarbeitet werden. Bei Drehachsen erfassen Positionsgeber einen Drehwinkel oder dessen Änderung an einer Achse und/oder einer Welle relativ zu einem feststehenden Teil. Bei Linearachsen erfassen Positionsgeber eine Achsposition oder deren Änderung an einer Achse relativ zu einem feststehenden Teil. Der Positionsgeber ist vorzugsweise an dem Antrieb der Achse, wie beispielsweise in einem Elektromotor der Achse, befestigt. Der Positionsgeber kann eine photoelektrische, eine magnetische oder eine unmagnetische Abtastung verwenden.

Gemäß einer weiteren Ausführungsform wird der zweite Beschleunigungsgrenzwert in dem Schritt a) in Abhängigkeit des ersten Beschleunigungsgrenzwertes und des ersten Abtastintervalls bestimmt.

Gemäß einer weiteren Ausführungsform wird die aktuelle Beschleunigung in Schritt c) mittels der ermittelten Mehrzahl N von Positionswerten, mit N ≥ 3, berechnet, wobei die aktuelle Beschleunigung in Abhängigkeit einer berechneten Differenz eines ersten und eines zweiten berechneten Geschwindigkeitswertes sowie des ersten Abtastintervalls und/oder des zweiten Zeitintervalls berechnet wird.

Gemäß einer weiteren Ausführungsform werden jeweils der erste und der zweite Geschwindigkeitswert aus der Mehrzahl N von Positionswerten berechnet, wobei die Positionswerte zueinander benachbarte Abtastwerte einer Abtastreihenfolge mittels Abtasten mit dem ersten Abtastintervall ermittelt werden.

Der erste Geschwindigkeitswert $v_1$ wird insbesondere mittels einer Berechnung einer Differenz zweier benachbarter Positionswerte $P_1$ und $P_2$ aus der Mehrzahl N von Positionswerten berechnet. Der erste Geschwindigkeitswert $v_1$ gibt vorzugsweise an, welche Geschwindigkeit zwischen den zwei benachbarten Positionswerten oder auch Abtastpunkten vorliegt. Die berechnete Differenz wird durch das erste Abtastintervall $T_1$ dividiert, um so den ersten Geschwindigkeitswert $v_1$ zu erhalten. Der zweite Geschwindigkeitswert $v_2$ wird analog dazu berechnet. Hierbei wird eine Differenz zweier benachbarter Positionswerte $P_2$ und $P_3$ aus der Mehrzahl N von Positionswerten berechnet. Die so berechnete Differenz wird durch das zweite Zeitintervall $T_2$ dividiert, um so den zweiten Geschwindigkeitswert $v_2$ zu erhalten. Die aktuelle Beschleunigung wird insbesondere durch eine Berechnung einer Differenz zweier benachbarter Geschwindigkeitswerte $v_1$ und $v_2$ und durch Division durch das erste Abtastintervall $T_1$ und/oder das zweite Zeitintervall $T_2$ berechnet. Zueinander benachbarte Abtastwerte einer Abtastreihenfolge sind insbesondere Abtastwerte oder Positionswerte, welche zeitlich nacheinander in einer Reihenfolge erhalten werden und bei denen keine Lücken innerhalb der Abtastung aufkommen. Beispielsweise werden mittels eines ersten Abtastintervalls mit $T_1$ = 10ms fünf Positionswerte erhalten. Die Positionswerte werden jeweils zum Zeitpunkt $t_0$ = 0ms, $t_1$ = 10ms, $t_2$ = 20ms, $t_3$ = 30ms und $t_4$ = 40ms ermittelt. Zwischen diesen Positionswerten liegen keine Zeitintervalle, welche nicht abgetastet werden. Somit werden die Positionswerte in einer nacheinander liegenden zeitlichen Reihenfolge benachbart zueinander ermittelt.

Erfindungsgemäß ist das zweite Zeitintervall als ein zweites Abtastintervall ausgebildet, bei welchem eine Mehrzahl M von Positionswerten der Achse mittels Abtastens mit dem zweiten Abtastintervall ermittelt wird, mit $M \geq 3$.

Das zweite Zeitintervall umfasst insbesondere das zweite Abtastintervall. Das zweite Abtastintervall ist vorzugsweise unterschiedlich zu dem ersten Abtastintervall.

Nachfolgend wird zum besseren Verständnis die Überwachung der zumindest einen aktuellen Beschleunigung mittels der gleichzeitigen Überwachung durch die erste Überwachung und die zweite Überwachung anhand von mathematischen Formeln und Zusammenhängen detaillierter erläutert.

In dem folgenden Beispiel umfasst die Mehrachskinematik insbesondere vier Achsen, beispielsweise vier Robotergelenke.

Ein kartesischer Geschwindigkeitsgrenzwert $v_{G\_K}$ wird dabei mit 250mm/s festgelegt.

Weiterhin wird ein parametrierter Geschwindigkeitsgrenzwert $v_{G\_P}$ = 200mm/s angegeben. $v_{G\_P}$ ist vorzugsweise ein Geschwindigkeitswert, welcher unterhalb des kartesischen Geschwindigkeitsgrenzwertes $v_{G\_K}$ liegt, damit ein Geschwindigkeitsabstand für das Reagieren der Maschine aufgrund der Reaktionszeit der Maschine noch vorhanden ist. Der Geschwindigkeitsabstand $v_D$ zwischen dem kartesischen Geschwindigkeitsgrenzwert $v_{G\_K}$ und dem parametrierten Geschwindigkeitsgrenzwert $v_{G\_P}$ liegt hierbei deshalb bei $v_D = v_{G\_K} - v_{G\_P}$ = 250mm/s - 200mm/s = 50mm/s. Ferner wird die Reaktionszeit der kartesischen Geschwindigkeitsüberwachung mittels des kartesischen Geschwindigkeitsgrenzwerts $v_{G\_K}$ mit $t_R$ = 50ms festgelegt. Hieraus folgt insbesondere im vorliegenden Fall mit vier Achsen, dass, wenn eine kartesische Beschleunigung einen kartesischen Beschleunigungsgrenzwert von $a_{G\_K} = v_D / t_R$ = 50mm/s / 50ms = 1000mm/s$^2$ nicht überschreitet, die kartesische Geschwindigkeitsüberwachung in allen Fällen noch rechtzeitig reagiert. Dies liegt daran, dass die Beschleunigung jeder der Achsen $a_{Achse}$ auf 250mm/s$^2$ begrenzt wird. Somit ergibt sich ein kartesischer Gesamtbeschleunigungsgrenzwert von 1000mm/s$^2$.

Zusätzlich wird insbesondere angenommen, dass eine der vier Achsen eine Linearachse ist, deren Positionswert auf 0.5$\mu$m genau abgetastet wird. Somit beträgt der Diskretisierungsfehler bei dem ermittelten Positionswert $e_p$ = 0.25$\mu$m (siehe Formel (1.0): $2 \cdot e_p = 2 \cdot 0.25\mu$m).

Um somit den ersten Beschleunigungsgrenzwert $a_{G1}$ = 250mm/s$^2$ dieser Achse zu überwachen, darf der Diskretisierungsfehler in der berechneten Beschleunigung $e_a$ maximal 10mm/s$^2$ betragen. Wenn daher die tatsächliche Beschleunigung den Wert von 240mm/s$^2$ nicht überschreitet, werden unerwünschte Abschaltungen vermieden.

Auf Basis des kartesischen Geschwindigkeitsgrenzwertes $v_{G\_K}$ wird nachfolgend nun das erste Abtastintervall $T_1$ bestimmt. Dabei gelten insbesondere folgende Zusammenhänge:

Diskretisierungsfehler in der berechneten Achsgeschwindigkeit $e_v$:

$$e_v = (2 \cdot e_p) / T_1 \qquad\qquad (1.0)$$

Diskretisierungsfehler in der berechneten Achsbeschleunigung $e_a$:

$$e_a = (2 \cdot e_v) / T_1 \qquad\qquad (1.1)$$

Hieraus folgt vorzugsweise die Berechnung des ersten Abtastintervalls $T_1$:

$$T_1 = \sqrt{(4 \cdot e_{p/e_a})} = \sqrt{4 \cdot 0.25\mu m/s^2 / 10000 \mu m/s^2} = 10\,ms \qquad (1.2)$$

Um somit den Diskretisierungsfehler $e_a$ auf 10mm/s² zu begrenzen, darf das erste Abtastintervall $T_1$ daher insbesondere nicht kleiner als 10ms sein.

Weiterhin wird angenommen, dass die Reaktionszeit einer ersten SLA-Funktion $t_{r\_SLA1} = 3.5 \cdot T_1 = 35ms$ beträgt.

Im Falle einer unzulässigen Beschleunigung $a_1$ der Achse kann daher die axiale Geschwindigkeit der Achse auf den Wert $v_{D\_1}$ ansteigen, mit $v_{D\_1} = 35ms \cdot a_1$.

Dieser Wert $v_{D\_1}$ soll kleiner als der Abstand $v_D = 50mm/s$ aus der kartesischen Geschwindigkeitsüberwachung sein. Hieraus folgt insbesondere für die maximal zu beherrschende Beschleunigung $a_1$ unter Verwendung des ersten Abtastintervalls $T_1$ die Formel:

$$a_1 = (v_D / v_{D\_1}) = (50mm/s / 35ms) = 1.428\ m/s^2 \qquad (1.3)$$

Durch eine Überwachung mit dem ersten Abtastintervall $T_1 = 10ms$ können also nur Überschreitungen der aktuellen Beschleunigungen rechtzeitig erkannt werden, bei denen die axiale Beschleunigung unterhalb eines Wertes von $a_1 = 1.428m/s^2$ liegt.

Um zusätzlich auch weitere axiale Beschleunigungen zu überwachen, welche beispielsweise oberhalb des Wertes von 1.428m/s² liegen, wird parallel, also gleichzeitig, ein zweiter Beschleunigungsgrenzwert $a_2 = 1400mm/s^2$ überwacht. Hierbei ist der zweite Beschleunigungsgrenzwert mit $a_2 = 1400mm/s^2$ insbesondere unter der maximal beherrschten Beschleunigung des ersten Beschleunigungsgrenzwertes, die bei $a_1 = 1.428m/s^2 = 1428mm/s^2$ liegt. Somit ergibt sich vorteilhafterweise eine Überlappung der beiden Überwachungen.

Da vorzugsweise der zweite Beschleunigungsgrenzwert dabei größer als der erste Beschleunigungsgrenzwert ist, kann auch mit einem kleineren Abtastintervall gearbeitet werden.

Dies liegt daran, dass der zweite Beschleunigungsgrenzwert vorzugsweise weiter von der zulässigen kartesischen Beschleunigung einer Achse von $a_{Achse} = 250mm/s^2$ entfernt liegt. Somit ist hierbei ein größerer Diskretisierungsfehler in der berechneten Beschleunigung zulässig, ohne dass es zu unerwünschten Abschaltungen kommt.

Hieraus folgt die Berechnung des zweiten Abtastintervalls $T_2$:

$$T_2 = \sqrt{(4 \cdot e_{p/e_a})} = \sqrt{4 \cdot 0.25\mu m/s^2 / 1000000 \mu m/s^2} = 1\,ms \qquad (1.4)$$

Folglich beträgt das zweite Abtastintervall $T_2 = 1ms$. Die Reaktionszeit einer zweiten SLA-Funktion beträgt somit $t_{r\_SLA2} = 3.5 \cdot T_2 = 3.5ms$.

Im Falle einer unzulässigen Beschleunigung $a_2$ der Achse kann daher die axiale Geschwindigkeit der Achse auf den Wert $v_{D\_2}$ ansteigen, mit $v_{D\_2} = 3.5ms \cdot a_2$.

Infolgedessen ergibt sich insbesondere für die maximal zu beherrschende Beschleunigung $a_2$ unter Verwendung des zweiten Abtastintervalls $T_2$ die Formel:

$$a_2 = (v_D / v_{D\_2}) = (50mm/s / 3.5ms) = 14.28\ m/s^2 \qquad (1.5)$$

Zusammenfassend ergibt sich für das vorliegende Beispiel die folgende Tabelle bei der Überwachung zumindest einer aktuellen Beschleunigung unter Verwendung der ersten Überwachung und der zweiten Überwachung.

| Beschleunigungsgrenzwert | Abtastintervall | Reaktionszeit | beherrschte Beschleunigung |
|---|---|---|---|
| 250mm/s² | $T_1 = 10ms$ | $t_{r\_SLA1} = 35ms$ | 1.428m/s² |
| 1400mm/s² | $T_2 = 1ms$ | $t_{r\_SLA2} = 3.5ms$ | 14.28m/s² |

Erfindungsgemäß ist der erste Beschleunigungsgrenzwert kleiner als der zweite Beschleunigungsgrenzwert und das erste Abtastintervall größer als das zweite Abtastintervall.

Insbesondere wird der kleinere erste Beschleunigungsgrenzwert einem größeren ersten Abtastintervall zugeordnet und der größere zweite Beschleunigungs-grenzwert einem kleineren zweiten Abtastintervall zugeordnet.

Gemäß einer weiteren Ausführungsform wird zusätzlich zu dem ersten und dem zweiten Beschleunigungsgrenzwert eine Anzahl G von weiteren Beschleunigungsgrenzwerten zur Überwachung der Beschleunigung der Achse bestimmt, mit G $\geq$ 1, wobei einem jeden weiteren Beschleunigungsgrenzwert ein weiteres Abtastintervall zugeordnet wird und alle Beschleunigungsgrenzwerte unterschiedlich zueinander ausgebildet sind.

Ein dritter Beschleunigungsgrenzwert der einem dritten Abtastintervall zugeordnet ist oder weitere

Beschleunigungsgrenzwerte mit weiteren zugeordneten Abtastintervallen werden insbesondere dann verwendet, wenn eine exaktere Ermittlung der tatsächlichen Beschleunigung und/oder eine Beherrschung von größeren Beschleunigungen gewünscht sind. Dieser weitere Beschleunigungsgrenzwert, wie ein dritter oder ein vierter Beschleunigungsgrenzwert, wird hierbei insbesondere mittels einer dritten Überwachung und einer vierten Überwachung parallel und gleichzeitig zu der ersten und der zweiten Überwachung überwacht.

Gemäß einer weiteren Ausführungsform wird das zweite Zeitintervall als eine Filterzeit eines bestimmten Filters gewählt, wobei der bestimmte Filter insbesondere einen PT1-Filter umfasst.

Bei dieser weiteren Ausführungsform wird insbesondere eine Kombination aus einer Überwachung von gefilterter und ungefilterter Beschleunigung durchgeführt.

Im Detail bedeutet das vorzugsweise, dass ein Beschleunigungsgrenzwert für die gefilterte Beschleunigung vorgegeben wird. Ein Beschleunigungsgrenzwert für die ungefilterte Beschleunigung wird derart berechnet, dass ein einmaliger Beschleunigungsimpuls, der vom Filter herausgefiltert wird, auch bei der ungefilterten Überwachung nicht als Grenzwertverletzung interpretiert wird.

Der Vorteil der zusätzlichen Beschleunigungsgrenzwert-Überwachung mit der ungefilterten Beschleunigung liegt darin, dass unabhängig vom aktuellen Filterzustand ein Beschleunigungsimpuls, der höher als der erste Beschleunigungsgrenzwert $a_{G1}$ liegt, als Beschleunigungsüberschreitung erkannt wird.

Der bestimmte Filter umfasst insbesondere, alternativ oder zusätzlich zu dem PT1-Filter, einen Tiefpassfilter der zweiten oder höherer Ordnung, oder einen gleitenden Mittelwertbilder.

Gemäß einer weiteren Ausführungsform wird der erste Beschleunigungsgrenzwert $a_{Grenz}$ in dem Schritt a) in Abhängigkeit des zweiten Beschleunigungsgrenzwertes $a_{Grenzfilter}$, des ersten Abtastintervalls $T_{Abtast}$ und des zweiten Zeitintervalls $T_{Filter}$ gemäß der Gleichung

$$a_{Grenz} \;=\; \frac{1}{1 - \left( \dfrac{1}{(exp^{(\frac{T_{Abtast}}{T_{Filter}})})} \right)} \cdot a_{Grenzfilter}$$

berechnet.

Hierbei handelt es sich bei dem ersten Beschleunigungsgrenzwert $a_{Grenz}$ insbesondere um den Beschleunigungsgrenzwert für die ungefilterte Beschleunigung. Der zweite Beschleunigungsgrenzwert $a_{Grenzfilter}$ ist dabei der Beschleunigungsgrenzwert für die gefilterte Beschleunigung. Das erste Abtastintervall $T_{Abtast}$ ist vorzugsweise 1ms kurz, während das zweite Zeitintervall $T_{Filter}$ 10ms lang ist.

Erfindungsgemäß wird ferner ein Computerprogrammprodukt vorgeschlagen, welches auf einer programmgesteuerten Einrichtung die Durchführung des wie oben erläuterten Verfahrens veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Erfindungsgemäß wird ferner eine Vorrichtung nach Anspruch 12 vorgeschlagen.

Die jeweilige Einheit, zum Beispiel die Ermittlungs-Einheit oder die Berechnungs-Einheit, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor oder als Steuerrechner eines Fahrzeuges ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Die für das vorgeschlagene Verfahren beschriebenen Ausführungsformen und Merkmale gelten für die vorgeschlagene Vorrichtung entsprechend.

Erfindungsgemäß wird ferner eine Maschine nach Anspruch 13 vorgeschlagen.

Die Maschine ist insbesondere als ein Roboter, als ein Handhabungsgerät oder als ein Kran ausgebildet. Eine der Achsen der Anzahl A von Achsen der Maschine, vorzugsweise des Roboters, ist insbesondere eine Achse, an der ein Endeffektor befestigt ist. Vorzugsweise sind zumindest zwei Achsen der Anzahl A miteinander verbunden.

Durch den Endeffektor (engl. "Tool Center Point (TCP)") wird die Werkzeugposition eines Industrieroboters beschrieben. Der Endeffektor ist insbesondere ein gedachter Referenzpunkt, der sich an einer geeigneten Stelle am Werkzeug des

Industrieroboters, insbesondere am Ende einer Achse, befindet.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.

Fig. 1    zeigt ein schematisches Ablaufdiagramm eines Ausführungsbeispiels eines Verfahrens zum Überwachen einer Beschleunigung einer Anzahl A von Achsen einer Mehrachskinematik; und

Fig. 2    zeigt ein schematisches Blockdiagramm einer Vorrichtung zum Überwachen einer Beschleunigung einer Anzahl A von Achsen einer Mehrachskinematik.

In den Figuren sind gleiche oder funktionsgleiche Elemente mit denselben Bezugszeichen versehen worden, sofern nichts anderes angegeben ist.

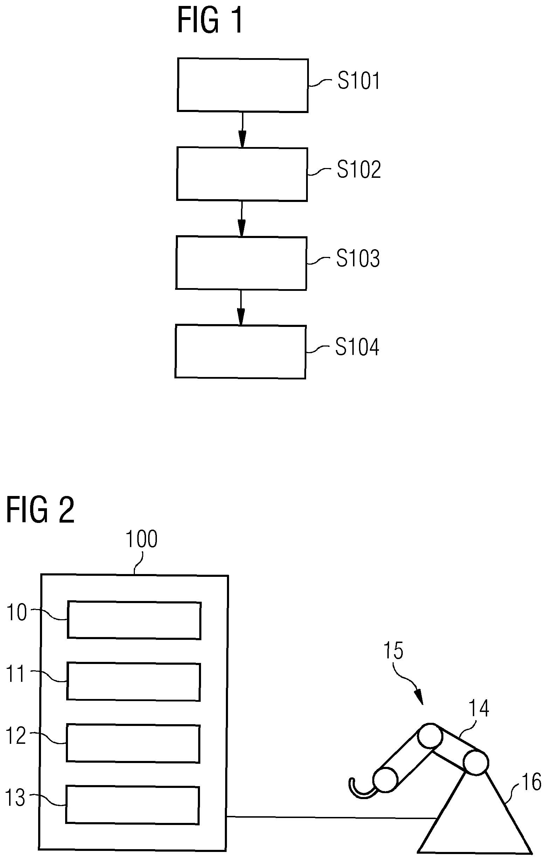

Fig. 1 zeigt ein schematisches Ablaufdiagramm eines Ausführungsbeispiels eines Verfahrens zum Überwachen einer Beschleunigung einer Anzahl A von Achsen 14 einer Mehrachskinematik 15 (siehe Fig. 2) unter Verwendung zumindest einer Abtastung mit einem ersten Abtastintervall.

Das Ausführungsbeispiel der Fig. 1 weist die folgenden Verfahrensschritte S101 bis S104 auf:

In dem Schritt S101 werden ein dem ersten Abtastintervall zugeordneter erster Beschleunigungsgrenzwert und einer davon unterschiedlicher zweiter Beschleunigungsgrenzwert für die Beschleunigung der Achse 14 bestimmt. Hierbei wird dem zweiten Beschleunigungsgrenzwert ein zweites Zeitintervall zugeordnet.

Der zweite Beschleunigungsgrenzwert wird in dem Schritt S101 in Abhängigkeit des ersten Beschleunigungsgrenzwertes und des ersten Abtastintervalls bestimmt.

Ferner wird in dem Schritt S101 der erste Beschleunigungsgrenzwert $a_{Grenz}$ in Abhängigkeit des zweiten Beschleunigungsgrenzwertes $a_{Grenzfilter}$, des ersten Abtastintervalls $T_{Abtast}$ und des zweiten Zeitintervalls $T_{Filter}$ gemäß der Gleichung

$$a_{Grenz} = \frac{1}{1 - \left( \frac{1}{\left( exp^{\left( \frac{T_{Abtast}}{T_{Filter}} \right)} \right)} \right)} \cdot a_{Grenzfilter}$$

berechnet.

In dem Schritt S102 wird eine Mehrzahl N von Positionswerten der Achse 14 mittels Abtastens mit dem ersten Abtastintervall ermittelt.

Hierbei umfasst die Mehrzahl N von Positionswerten der Achse 14 N ≥ 3 Positionswerte. Weiterhin wird die Ermittlung der Mehrzahl N von Positionswerten unter Verwendung zumindest eines Positionsgebers durchgeführt.

Als nächstes wird in dem Schritt S103 zumindest eine aktuelle Beschleunigung mittels der ermittelten N Positionswerte berechnet. Die Mehrzahl N von Positionswerten umfasst N ≥ 3 positionswerte.

Die aktuelle Beschleunigung wird in dem Schritt S103 insbesondere in Abhängigkeit einer berechneten Differenz eines ersten und eines zweiten berechneten Geschwindigkeitswertes sowie des ersten Abtastintervalls und/oder des zweiten Zeitintervalls berechnet.

Der erste und der zweite Geschwindigkeitswert werden hierbei aus der Mehrzahl N von Positionswerten berechnet. Die Positionswerte zueinander benachbarte Abtastwerte einer Abtastreihenfolge werden dabei mittels Abtastens mit dem ersten Abtastintervall ermittelt.

In dem Schritt S104 wird die berechnete aktuelle Beschleunigung mittels einer den ersten Beschleunigungs-grenzwert und das zugeordnete erste Abtastintervall verwendenden ersten Überwachung und gleichzeitig mittels einer den zweiten Beschleunigungsgrenzwert und das zugeordnete zweite Zeitintervall verwendenden zweiten Überwachung überwacht.

Zusätzlich wird in dem Schritt S104 die berechnete aktuelle Beschleunigung jeweils mit dem in der ersten Überwachung verwendeten ersten Beschleunigungsgrenzwert und mit dem in der zweiten Überwachung verwendeten zweiten Beschleunigungsgrenzwert verglichen, um zu ermitteln, ob die berechnete aktuelle Beschleunigung den ersten oder den zweiten Beschleunigungsgrenzwert überschreitet.

Weiterhin wird in einem nicht dargestellten Schritt eine Aktion durchgeführt, in Abhängigkeit davon, ob die berechnete aktuelle Beschleunigung den ersten oder den zweiten Beschleunigungsgrenzwert überschreitet. Die Aktion umfasst hierbei zumindest ein Stillsetzen der Achse 14.

Insbesondere ist das zweite Zeitintervall als ein zweites Abtastintervall ausgebildet. Dabei wird eine Mehrzahl M von Positionswerten der Achse 14, mit M ≥ 3, mittels Abtastens mit dem zweiten Abtastintervall ermittelt.

Ferner ist der erste Beschleunigungsgrenzwert kleiner als der zweite Beschleunigungsgrenzwert. Das erste Abtastintervall ist zudem größer als das zweite Abtastintervall.

Ebenso wird zusätzlich zu dem ersten und dem zweiten Beschleunigungsgrenzwert eine Anzahl G von weiteren Beschleunigungsgrenzwerten zur Überwachung der Beschleunigung der Achse 14 bestimmt, mit G ≥ 1. Dabei wird einem jeden weiteren Beschleunigungsgrenzwert ein weiteres Abtastintervall zugeordnet und alle Beschleunigungsgrenzwerte sind unterschiedlich zueinander ausgebildet.

Das zweite Zeitintervall wird alternativ als eine Filterzeit eines bestimmten Filters gewählt, wobei der bestimmte Filter insbesondere einen PT1-Filter umfasst.

Fig. 2 zeigt ein schematisches Blockdiagramm einer Vorrichtung 100 zum Überwachen einer Beschleunigung einer Anzahl A von Achsen 14 einer Mehrachskinematik 15 unter Verwendung zumindest einer Abtastung mit einem ersten Abtastintervall.

Die Vorrichtung 100 der Fig. 2 umfasst eine Bestimmungs-Einheit 10, eine Ermittlungs-Einheit 11, eine Berechnungs-Einheit 12 sowie eine Überwachungs-Einheit 13.

Die Bestimmungs-Einheit 10 ist dazu eingerichtet, einen dem ersten Abtastintervall zugeordneten ersten Beschleunigungsgrenzwert und einen davon unterschiedlichen zweiten Beschleunigungsgrenzwert für die Beschleunigung der Achse 14 zu bestimmen. Der zweite Beschleunigungsgrenzwert ist hierbei einem zweiten Zeitintervall zugeordnet.

Die Ermittlungs-Einheit 11 ist dazu eingerichtet, eine Mehrzahl N von Positionswerten der Achse 14 mittels Abtastens mit dem ersten Abtastintervall zu ermitteln.

Weiterhin ist die Berechnungs-Einheit 12 dazu eingerichtet, zumindest eine aktuelle Beschleunigung mittels der ermittelten N Positionswerte zu berechnen.

Die Überwachungs-Einheit 13 ist dazu eingerichtet, die berechnete aktuelle Beschleunigung mittels einer den ersten Beschleunigungsgrenzwert und das zugeordnete erste Abtastintervall verwendenden ersten Überwachung und gleichzeitig mittels einer den zweiten Beschleunigungsgrenzwert und das zugeordnete zweite Zeitintervall verwendenden zweiten Überwachung zu überwachen.

Weiterhin ist in Fig. 2 eine Maschine, insbesondere ein Roboter 16, mit der Vorrichtung 100 und mit der Anzahl A von Achsen 14 der Mehrachskinematik 15 gezeigt. Die Anzahl A von Achsen 14 ist A ≥ 2, insbesondere A ≥ 4, wobei in Fig. 2 die gezeigte Anzahl A von Achsen 14 A ≥ 2 ist.

Die aktuelle Beschleunigung jeder Achse 14 aus der Anzahl A von Achsen 14 der Mehrachskinematik 15 des Roboters 16 wird mittels der Vorrichtung 100 überwacht.

Bezugszeichenliste

| 10 | Bestimmungs-Einheit |
| 11 | Ermittlungs-Einheit |
| 12 | Berechnungs-Einheit |
| 13 | Überwachungs-Einheit |
| 14 | Achse |
| 15 | Mehrachskinematik |
| 16 | Roboter |
| 100 | Vorrichtung |
| S101 bis S104 | Verfahrensschritte |

**Patentansprüche**

1. Verfahren zum Überwachen einer Beschleunigung einer Anzahl A von Achsen (14) einer Mehrachskinematik (15) unter Verwendung zumindest einer Abtastung mit einem ersten Abtastintervall, mit den Schritten:

a) Bestimmen eines dem ersten Abtastintervall zugeordneten ersten Beschleunigungsgrenzwertes und eines davon unterschiedlichen zweiten Beschleunigungsgrenzwertes für die Beschleunigung der Achse (14), wobei dem zweiten Beschleunigungsgrenzwert ein zweites Zeitintervall zugeordnet wird,

b) Ermitteln einer Mehrzahl N von Positionswerten der Achse (14) mittels Abtastens mit dem ersten Abtastintervall,

c) Berechnen zumindest einer aktuellen Beschleunigung mittels der ermittelten N Positionswerte, und

d) Überwachen der berechneten aktuellen Beschleunigung mittels einer den ersten Beschleunigungsgrenzwert und das zugeordnete erste Abtastintervall verwendenden ersten Überwachung und gleichzeitig mittels einer den zweiten Beschleunigungsgrenzwert und das zugeordnete zweite Zeitintervall verwendenden zweiten Überwachung, wobei das zweite Zeitintervall als ein zweites Abtastintervall ausgebildet ist, bei welchem eine Mehrzahl M von Positionswerten der Achse (14) mittels Abtastens mit dem zweiten Abtastintervall ermittelt wird, mit M ≥ 3 und wobei der erste Beschleunigungsgrenzwert kleiner als der zweite Beschleunigungsgrenzwert ist und das erste Abtastintervall größer als das zweite Abtastintervall ist.

2.  Verfahren nach Anspruch 1,
    **dadurch gekennzeichnet,**
    **dass** der Schritt d) umfasst:
    Vergleichen der berechneten aktuellen Beschleunigung jeweils mit dem in der ersten Überwachung verwendeten ersten Beschleunigungsgrenzwert und mit dem in der zweiten Überwachung verwendeten zweiten Beschleunigungsgrenzwert, um zu ermitteln, ob die berechnete aktuelle Beschleunigung den ersten und/oder den zweiten Beschleunigungsgrenzwert überschreitet.

3.  Verfahren nach Anspruch 2,
    **dadurch gekennzeichnet,**
    **dass** in einem Schritt e) eine Aktion durchgeführt wird, in Abhängigkeit davon, ob die berechnete aktuelle Beschleunigung den ersten und/oder den zweiten Beschleunigungsgrenzwert überschreitet, wobei die Aktion zumindest ein Stillsetzen der Achse (14) umfasst.

4.  Verfahren nach einem der Ansprüche 1 - 3,
    **dadurch gekennzeichnet,**
    **dass** die Mehrzahl N von Positionswerten der Achse (14), mit N ≥ 3, in dem Schritt b) mittels Abtasten mit dem ersten Abtastintervall ermittelt wird, wobei die Ermittlung der Mehrzahl N von Positionswerten unter Verwendung zumindest eines Positionsgebers durchgeführt wird.

5.  Verfahren nach einem der Ansprüche 1 - 4,
    **dadurch gekennzeichnet,**
    **dass** der zweite Beschleunigungsgrenzwert in dem Schritt a) in Abhängigkeit des ersten Beschleunigungsgrenzwertes und des ersten Abtastintervalls bestimmt wird.

6.  Verfahren nach den Ansprüchen 4 und 5,
    **dadurch gekennzeichnet,**
    **dass** die aktuelle Beschleunigung in Schritt c) mittels der ermittelten Mehrzahl N von Positionswerten, mit N ≥ 3, berechnet wird, wobei die aktuelle Beschleunigung in Abhängigkeit einer berechneten Differenz eines ersten und eines zweiten berechneten Geschwindigkeitswertes sowie des ersten Abtastintervalls und/oder des zweiten Zeitintervalls berechnet wird.

7.  Verfahren nach Anspruch 6,
    **dadurch gekennzeichnet,**
    **dass** jeweils der erste und der zweite Geschwindigkeitswert aus der Mehrzahl N von Positionswerten berechnet werden, wobei die Positionswerte zueinander benachbarte Abtastwerte einer Abtastreihenfolge mittels Abtasten mit dem ersten Abtastintervall ermittelt werden.

8.  Verfahren nach einem der Ansprüche 1 bis 7,
    **dadurch gekennzeichnet,**
    **dass** zusätzlich zu dem ersten und dem zweiten Beschleunigungsgrenzwert eine Anzahl G von weiteren Beschleunigungsgrenzwerten zur Überwachung der Beschleunigung der Achse (14) bestimmt wird, mit G ≥ 1, wobei einem jeden weiteren Beschleunigungsgrenzwert ein weiteres Abtastintervall zugeordnet wird und alle Beschleunigungsgrenzwerte unterschiedlich zueinander ausgebildet sind.

**9.** Verfahren nach Anspruch 5,
**dadurch gekennzeichnet,**
**dass** das zweite Zeitintervall als eine Filterzeit eines bestimmten Filters gewählt wird, wobei der bestimmte Filter insbesondere einen PT1-Filter umfasst.

**10.** Verfahren nach Anspruch 9,
**dadurch gekennzeichnet,**
**dass** der erste Beschleunigungsgrenzwert $a_{Grenz}$ in dem Schritt a) in Abhängigkeit des zweiten Beschleunigungsgrenzwertes $a_{Grenzfilter}$, des ersten Abtastintervalls $T_{Abtast}$ und des zweiten Zeitintervalls $T_{Filter}$ gemäß der Gleichung

$$a_{Grenz} = \frac{1}{1 - \left( \frac{1}{\left( exp^{\left( \frac{T_{Abtast}}{T_{Filter}} \right)} \right)} \right)} \cdot a_{Grenzfilter}$$

berechnet wird.

**11.** Computerprogrammprodukt, welches auf einer programmgesteuerten Einrichtung die Durchführung des Verfahrens nach einem der Ansprüche 1 bis 10 veranlasst.

**12.** Vorrichtung (100) eingerichtet zum Überwachen einer Beschleunigung einer Anzahl A von Achsen (14) einer Mehrachskinematik (15) unter Verwendung zumindest einer Abtastung mit einem ersten Abtastintervall, umfassend:

eine Bestimmungs-Einheit (10) eingerichtet zum Bestimmen eines dem ersten Abtastintervall zugeordneten ersten Beschleunigungsgrenzwertes und eines davon unterschiedlichen zweiten Beschleunigungsgrenzwertes für die Beschleunigung der Achse (14), wobei dem zweiten Beschleunigungsgrenzwert ein zweites Zeitintervall zugeordnet ist,
eine Ermittlungs-Einheit (11) eingerichtet zum Ermitteln einer Mehrzahl N von Positionswerten der Achse (14) mittels Abtastens mit dem ersten Abtastintervall,
eine Berechnungs-Einheit (12) eingerichtet zum Berechnen zumindest einer aktuellen Beschleunigung mittels der ermittelten N Positionswerte, und
eine Überwachungs-Einheit (13) eingerichtet zum Überwachen der berechneten aktuellen Beschleunigung mittels einer den ersten Beschleunigungsgrenzwert und das zugeordnete erste Abtastintervall verwendenden ersten Überwachung und gleichzeitig mittels einer den zweiten Beschleunigungsgrenzwert und das zugeordnete zweite Zeitintervall verwendenden zweiten Überwachung, wobei das zweite Zeitintervall als ein zweites Abtastintervall ausgebildet ist, bei welchem eine Mehrzahl M von Positionswerten der Achse (14) mittels Abtastens mit dem zweiten Abtastintervall ermittelbar ist, mit M ≥ 3 und wobei der erste Beschleunigungsgrenzwert kleiner als der zweite Beschleunigungsgrenzwert ist und das erste Abtastintervall größer als das zweite Abtastintervall ist.

**13.** Maschine mit einer Vorrichtung nach Anspruch 12 und mit der Anzahl A von Achsen (14) der Mehrachskinematik (15), wobei die Anzahl A ≥ 2, insbesondere A ≥ 4 ist, wobei die aktuelle Beschleunigung jeder Achse (14) aus der Anzahl A von Achsen (14) der Mehrachskinematik (15) der Maschine mittels der Vorrichtung (100) überwacht wird.

**Claims**

**1.** Method for monitoring an acceleration of a number A of axes (14) of a multi-axis kinematic system (15) using at least one sampling with a first sampling interval, including the steps of:

a) determining a first acceleration limit assigned to the first sampling interval and a second acceleration limit, differing therefrom, for the acceleration of the axis (14), with a second time interval being assigned to the second acceleration limit,
b) ascertaining a plurality N of position values of the axis (14) by means of sampling with the first sampling interval,
c) calculating at least one current acceleration by means of the ascertained N position values, and
d) monitoring the calculated current acceleration by means of first monitoring that uses the first acceleration limit and the assigned first sampling interval and, simultaneously, by means of second monitoring that uses the second acceleration limit and the assigned second time interval, the second time interval being formed as a second sampling interval, in which a plurality M of position values of the axis (14) are ascertained by means of sampling with the second sampling interval, where M ≥ 3, and the first acceleration limit being less than the second acceleration limit and the first sampling interval being greater than the second sampling interval.

2. Method according to Claim 1,
   **characterized**
   **in that** step d) comprises:

   comparing the calculated current acceleration to, in each case, the first acceleration limit used during the first monitoring and the second acceleration limit used during the second monitoring in order to ascertain whether the calculated current acceleration exceeds the first and/or the second acceleration limit.

3. Method according to Claim 2,
   **characterized**
   **in that** an action is performed in a step e) depending on whether the calculated current acceleration exceeds the first and/or the second acceleration limit, the action at least comprising a stopping of the axis (14).

4. Method according to any one of Claims 1-3,
   **characterized**
   **in that** the plurality N of position values of the axis (14), where N ≥ 3, are ascertained in step b) by means of sampling with the first sampling interval, the ascertainment of the plurality N of position values being performed using at least one position encoder.

5. Method according to any one of Claims 1-4,
   **characterized**
   **in that** the second acceleration limit in step a) is determined depending on the first acceleration limit and the first sampling interval.

6. Method according to Claims 4 and 5,
   **characterized**
   **in that** the current acceleration in step c) is calculated by means of the ascertained plurality N of position values, where N ≥ 3, with the current acceleration being calculated depending on a calculated difference between a first and a second calculated speed value and depending on the first sampling interval and/or the second time interval.

7. Method according to Claim 6,
   **characterized**
   **in that** both the first speed value and the second speed value are calculated from the plurality N of position values, with the position values of adjacent sampled values in a sampling sequence being ascertained by sampling with the first sampling interval.

8. Method according to any one of Claims 1 to 7, **characterized**
   **in that** a number G of further acceleration limits for monitoring the acceleration of the axis (14) are determined in addition to the first acceleration limit and the second acceleration limit, where G ≥ 1, with each further acceleration limit being assigned a further sampling interval and all acceleration limits being formed differently from one another.

9. Method according to Claim 5,
   **characterized**
   **in that** the second time interval is chosen as a filter time of a certain filter, the certain filter comprising a PT1 filter in particular.

10. Method according to Claim 9,
    **characterized**
    **in that** the first acceleration limit $a_{limit}$ in step a) is calculated depending on the second acceleration limit $a_{limitfilter}$, the first sampling interval $T_{sample}$ and the second time interval $T_{filter}$ in accordance with the equation:

$$a_{limit} = \frac{1}{1 - \left(\dfrac{1}{\left(exp^{\left(\frac{T_{sample}}{T_{filter}}\right)}\right)}\right)} \cdot a_{limitfilter}.$$

**11.** Computer program product which prompts the implementation of the method according to any one of Claims 1 to 10 on a program-controlled device.

**12.** Apparatus (100) configured to monitor an acceleration of a number A of axes (14) of a multi-axis kinematic system (15) using at least one sampling with a first sampling interval, comprising:

a determination unit (10) configured to determine a first acceleration limit assigned to the first sampling interval and

a second acceleration limit, differing therefrom, for the acceleration of the axis (14), with a second time interval being assigned to the second acceleration limit,

an ascertainment unit (11) configured to ascertain a plurality N of position values of the axis (14) by means of sampling with the first sampling interval,

a calculation unit (12) configured to calculate at least one current acceleration by means of the ascertained N position values, and

a monitoring unit (13) configured to monitor the calculated current acceleration by means of first monitoring that uses the first acceleration limit and the assigned first sampling interval and, simultaneously, by means of second monitoring that uses the second acceleration limit and the assigned second time interval, the second time interval being formed as a second sampling interval, in which a plurality M of position values of the axis (14) are ascertainable by means of sampling with the second sampling interval, where M $\geq$ 3, and the first acceleration limit being less than the second acceleration limit and the first sampling interval being greater than the second sampling interval.

**13.** Machine comprising an apparatus according to Claim 12 and comprising the number A of axes (14) of the multi-axis kinematic system (15), with the number being A $\geq$ 2, in particular A $\geq$ 4, the current acceleration of each axis (14) of the number A of axes (14) of the multi-axis kinematic system (15) of the machine being monitored by means of the apparatus (100).

**Revendications**

**1.** Procédé destiné à la surveillance d'une accélération d'un nombre A d'axes (14) d'une cinématique multiaxe (15) grâce à l'utilisation d'au moins un balayage avec un premier intervalle de balayage, qui comprend les étapes dans lesquelles :

a) on détermine une première valeur limite d'accélération attribuée au premier intervalle de balayage et une deuxième valeur limite d'accélération qui diffère de la première pour l'accélération des axes (14) ; dans lequel un deuxième intervalle de temps est attribué à la deuxième valeur limite d'accélération ;

b) on spécifie une multitude N de valeurs de positions des axes (14) au moyen d'un balayage avec le premier intervalle de balayage ;

c) on calcule au moins une accélération en vigueur au moyen des N valeurs de positions qui ont été spécifiées ; et

d) on surveille l'accélération en vigueur qui a été calculée au moyen d'une première surveillance qui utilise la première valeur limite d'accélération et le premier intervalle de balayage qui lui est attribué et, de manière simultanée, au moyen d'une deuxième surveillance qui utilise la deuxième valeur limite d'accélération et le deuxième intervalle de temps qui lui est attribué ; dans lequel le deuxième intervalle de temps est réalisé pour faire office d'un deuxième intervalle de balayage dans lequel on spécifie une multitude M de valeurs de positions des axes (14) au moyen d'un balayage avec le deuxième intervalle de balayage, M étant supérieur ou égal à 3 ; et dans lequel la première valeur limite d'accélération est inférieure à la deuxième valeur limite d'accélération et le premier intervalle de balayage est supérieur au deuxième intervalle de balayage.

**2.** Procédé selon la revendication 1, **caractérisé en ce que** l'étape d) comprend le fait de :
comparer l'accélération en vigueur qui a été calculée à chaque fois à la première valeur limite d'accélération qui a été utilisée dans la première surveillance et à la deuxième valeur limite d'accélération qui a été utilisée dans la deuxième surveillance, dans le but de spécifier le fait de savoir si l'accélération en vigueur qui a été calculée dépasse vers le haut la première et/ou la deuxième valeur limite d'accélération.

**3.** Procédé selon la revendication 2, **caractérisé en ce que**, dans une étape e), on met en œuvre une action en fonction du fait de savoir si l'accélération en vigueur qui a été calculée dépasse vers le haut la première et/ou la deuxième valeur limite d'accélération ; dans lequel l'action comprend au moins une immobilisation des axes (14).

**4.** Procédé selon l'une quelconque des revendications 1 à 3, **caractérisé en ce que** l'on spécifie la multitude N de valeurs de positions des axes (14), N étant supérieur ou égal à 3, à l'étape b), au moyen d'un balayage avec le premier intervalle de balayage ; dans lequel on met en œuvre la spécification de la multitude N de valeurs de positions en utilisant au moins un indicateur de position.

**5.** Procédé selon l'une quelconque des revendications 1 à 4, **caractérisé en ce que** l'on détermine la deuxième valeur limite d'accélération à l'étape a) en fonction de la première valeur limite d'accélération et du premier intervalle de balayage.

**6.** Procédé selon les revendications 4 et 5, **caractérisé en ce que** l'on calcule l'accélération en vigueur à l'étape c) au moyen de la multitude N de valeurs de positions qui a été spécifiée, N étant supérieur ou égal à 3 ; dans lequel on calcule l'accélération en vigueur en fonction d'une différence qui a été calculée d'une première et d'une deuxième valeur de vitesse calculées, ainsi que du premier intervalle de balayage et/ou du deuxième intervalle de temps.

**7.** Procédé selon la revendication 6, **caractérisé en ce que** l'on calcule à chaque fois la première et la deuxième valeur de vitesse à partir de la multitude N de valeurs de positions ; dans lequel on spécifie les valeurs de positions de valeurs de balayage, d'une série de balayages, respectivement voisines au moyen d'un balayage avec le premier intervalle de balayage.

**8.** Procédé selon l'une quelconque des revendications 1 à 7, **caractérisé en ce que**, en plus de la première valeur et de la deuxième valeur limite d'accélération, on détermine un nombre G de valeurs limites d'accélération supplémentaires à des fins de surveillance de l'accélération des axes (14), G étant supérieur ou égal à 1 ; dans lequel un intervalle de balayage supplémentaire est attribué à chaque valeur limite d'accélération supplémentaire et toutes les valeurs limites d'accélération sont réalisées de manière respectivement différente.

**9.** Procédé selon la revendication 5, **caractérisé en ce que** l'on sélectionne le deuxième intervalle de temps à titre de temps de filtrage d'un filtre qui a été déterminé ; dans lequel le filtre qui a été déterminé comprend en particulier un filtre PT1.

**10.** Procédé selon la revendication 9, **caractérisé en ce que** l'on calcule la première valeur limite d'accélération $a_{Grenz}$ à l'étape a) en fonction de la deuxième valeur limite d'accélération $a_{Grenzfilter}$, du premier intervalle de balayage $T_{Abtast}$, et du deuxième intervalle de temps $T_{Filter}$ en se référant à l'équation :

$$a_{Grenz} = \frac{1}{1 - \left( \frac{1}{\left( exp^{\left( \frac{T_{Abtast}}{T_{Filter}} \right)} \right)} \right)} \cdot a_{Grenzfilter}$$

**11.** Produit de programme informatique qui procède, sur un dispositif commandé par un programme, à la mise en œuvre du procédé selon l'une quelconque des revendications 1 à 10.

**12.** Dispositif (100) conçu pour la surveillance d'une accélération d'un nombre A d'axes (14) d'une cinématique multiaxe (15) grâce à l'utilisation d'au moins un balayage avec un premier intervalle de balayage, qui comprend :

une unité de détermination (10) qui est conçue pour la détermination d'une première valeur limite d'accélération attribuée au premier intervalle de balayage et d'une deuxième valeur limite d'accélération qui diffère de la première pour l'accélération des axes (14) ; dans lequel un deuxième intervalle de temps est attribué à la deuxième valeur limite d'accélération ;

une unité de spécification (11) qui est conçue pour la détermination d'une multitude N de valeurs de positions des axes (14) au moyen d'un balayage avec le premier intervalle de balayage ;

une unité de calcul (12) qui est conçue pour le calcul d'au moins une accélération en vigueur au moyen des N valeurs de positions qui ont été spécifiées ; et

une unité de surveillance (13) qui est conçue pour la surveillance de l'accélération en vigueur qui a été calculée au moyen d'une première surveillance qui utilise la première valeur limite d'accélération et le premier intervalle de balayage qui lui est attribué et, de manière simultanée, au moyen d'une deuxième surveillance qui utilise la deuxième valeur limite d'accélération et le deuxième intervalle de temps qui lui est attribué ; dans lequel le deuxième intervalle de temps est réalisé pour faire office d'un deuxième intervalle de balayage dans lequel on peut spécifier une multitude M de valeurs de positions des axes (14) au moyen d'un balayage avec le deuxième intervalle de balayage, M étant supérieur ou égal à 3 ; et dans lequel la première valeur limite d'accélération est inférieure à la deuxième valeur limite d'accélération et le premier intervalle de balayage est supérieur au deuxième intervalle de balayage.

13. Machine qui comprend un dispositif selon la revendication 12 et qui comprend le nombre A d'axes (14) de la cinématique multiaxe (15) ; dans lequel le nombre A est supérieur ou égal à 2 ; en particulier, A est supérieur ou égal à 4 ; dans lequel on calcule l'accélération en vigueur de chaque axe (14) parmi le nombre A d'axes (14) de la cinématique multiaxe (15) de la machine au moyen du dispositif (100).

FIG 1

FIG 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2113344 A1